# EUROPEAN PATENT SPECIFICATION

(11) **EP 3 043 530 B1**
(45) Date of publication and mention of the grant of the patent: **25.03.2020**
(21) Application number: 14867548.1
(22) Date of filing: 19.11.2014
(51) Int. Cl.: H04L 29/08, H04W 4/00

(54) **METHOD AND APPARATUS FOR IMPLEMENTING SUBSCRIPTION NOTIFICATION**
VERFAHREN UND VORRICHTUNG ZUR IMPLEMENTIERUNG VON ABONNEMENTBENACHRICHTIGUNG
PROCÉDÉ ET APPAREIL DE MISE EN OEUVRE DE NOTIFICATION D'ABONNEMENT

(30) Priority: 05.12.2013 CN 201310655509
(43) Date of publication of application: 13.07.2016
(73) Proprietor: Huawei Technologies Co., Ltd., Longgang District Shenzhen, Guangdong 518129 (CN)
(72) Inventor: XIAO, Fangying, Shenzhen Guangdong 518129 (CN)
(74) Representative: Körber, Martin Hans
(86) International application number: PCT/CN2014/091492
(87) International publication number: WO 2015/081786

(56) References cited:
- CN-A- 102 904 960
- CN-A- 102 984 688
- CN-A- 103 209 162
- CN-A- 103 618 800
- Etsi: "Machine-to-Machine communications (M2M); Functional architecture Technical Specification", , 18 October 2013 (2013-10-18), pages 1-332, XP055218086, Retrieved from the Internet: URL:http://www.etsi.org/deliver/etsi_ts/10 2600_102699/102690/02.01.01_60/ts_102690v0 20101p.pdf [retrieved on 2015-10-02]
- Gordon A Hunt ET AL: "DDS - Advanced Tutorial Using QoS to Solve Real-World Problems OMG Real-Time & Embedded Workshop July 9-12, Arlington, VA", , 28 May 2009 (2009-05-28), XP055418611, Retrieved from the Internet: URL:https://web.archive.org/web/2013080103 2302if_/http://omg.org/news/meetings/works hops/RT-2007/00-T5_Hunt-revised.pdf

## Description

### TECHNICAL FIELD

The present invention relates to the field of machine-to-machine communications (Machine-to-Machine Communications, M2M) technologies, and in particular, to a method and an apparatus for implementing a subscription notification.

### BACKGROUND

Machine-to-machine communications (Machine-to-Machine Communications, M2M) is a network-based application and service focusing on intelligent machine-to-machine interactions. An M2M technology, by embedding a wireless or wired communication module and application processing logic in a machine, implements data communication without manual intervention, to meet informatization requirements of users on monitoring, commanding and scheduling, data collection and measurement, and the like.

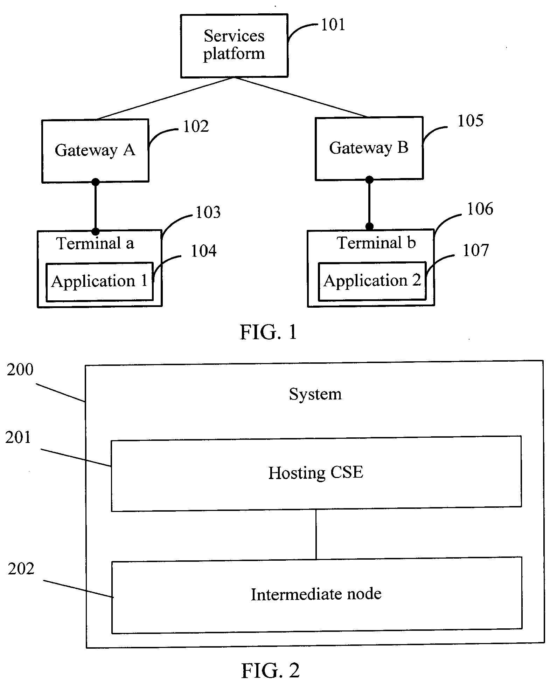

FIG. 1 is a typical M2M system architecture. Each terminal (for example, a sensor) remotely accesses a services platform via a gateway. By using service capabilities provided by the services platform, each application (for example, electricity meter reading and intelligent traffic) installed on the terminal acquires data collected by other terminals, or remotely controls and manages other terminals. Both the gateway and the platform include common services entity (Common Services Entity, CSE). An application on a terminal may register with a gateway to which the terminal is connected. All gateways need to register with the services platform. The CSE that receives registration is referred to as a local CSE. For example, in FIG. 1, a local CSE of an application 1 is in a gateway A, a local CSE of an application 2 is in a gateway B, and a local CSE of both the gateways A and B is in a services platform. After registration is successful, the local CSE creates a registration resource for a registree.

In some M2M application scenarios, an application 2 on a terminal b hopes to continuously know about a status change of an application 1 on terminal a, but does not hope to frequently query the application 1. A subscription notification mechanism is provided in the current M2M specifications TS 102 690 and TS 102 921 formulated by the European Telecommunications Standards Institute (European Telecommunications Standards Institute, ETSI). That is, the application 2 subscribes to a registration resource of the application 1 on the local CSE (namely, the gateway A) of the application 1; and when the application 1 changes, the application 1 updates a status of the registration resource to its local CSE, namely, the gateway A, and the gateway A sends a notification message to the application 2 according to the updated status of the registration resource. The application 2 is referred to as a subscriber. The registration resource of the application 1 on the local CSE of the application 1 is referred to as a subscribed resource. The CSE in which the subscribed resource is located is referred to as a hosting common services entity (hosting CSE). The hosting CSE creates a subscription resource according to a subscription request of the subscriber (namely, the application 2), where the subscription resource is used to describe a subscription relationship. Specific content of the subscription resource may include an identifier of the subscribed resource and a notification sending address, and optionally, further includes a subscription condition, and the like. In addition, an association relationship between the subscribed resource and the subscription resource is stored in the subscribed resource.

In the foregoing scenario, the notification message reported by the gateway A is forwarded to the gateway B via another CSE. Herein for example, the notification message is forwarded to the gateway B via only one CSE (namely, the services platform). To reduce connection overheads between the services platform and the gateway B, after receiving message reported by the gateway A, the services platform temporarily stores the message locally if the services platform determines that it is not an emergency message. When other emergency messages sent to the gateway B are received or when a temporary storage period expires, the services platform establishes a connection with the gateway B, and sends all the temporarily stored messages. The mechanism of receiving a message from one CSE and forwarding the message to another CSE after temporarily storing the message for a period of time is referred to as a store-and-forward (store-and-forward, SAF) mechanism. In the message sending process, a CSE performing the store-and-forward mechanism is referred to as an intermediate node, for example, the services platform in the scenario, and the period in which the message is temporarily stored in the intermediate node is referred to as a store-and-forward delay.

Because of the existence of the store-and-forward mechanism, multiple notification messages sent at different times may arrive at a subscriber over one connection. For example, in the foregoing scenario, the application 1 is used to generate weather information; the application 2 is used to provide a reminder of life for a user according to weather, and needs to know in real time about weather change information, and therefore subscribes to the application 1 and creates a subscription resource 1. When the weather information is updated, the gateway A of a meteorological department sends a notification message to the application 2 according to the subscription resource 1. Because the notification of a weather change is not an emergency notification message, when the notification message arrives at the services platform, the services platform temporarily stores the notification message according to a store-and-forward policy. In the period in which the notification message is temporarily stored, if the weather changes, the services platform receives a new notification message that is sent by the gateway A to the application 2 according to the subscription resource 1. In the existing subscription notification mechanism, the two notification messages may arrive at the application 2 over one connection, that is, the subscriber may receive, over one connection, multiple notification messages that are sent according to the same subscription resource. However, for some subscribers, the application 2 cares about only latest weather information. Therefore, notification messages sent earlier are invalid, and a waste of network resources and computing resources of the subscriber is caused.

### SUMMARY

Embodiments of the present invention provide a method and an apparatus for implementing a subscription notification, which can avoid a waste of network resources and computing resources that is caused when multiple notification messages sent according to a same subscription resource are simultaneously sent to a subscriber over one connection.

According to a first aspect, an embodiment of the present invention provides machine to machine M2M system for implementing a subscription notification, comprising a hosting common services entity CSE and an intermediate node, where the hosting CSE includes: a receiving unit, configured to receive a subscription resource creation request of a subscriber, where the subscription resource creation request includes a unique identifier of a subscribed resource; a resource creating unit, configured to create a subscription resource according to the subscription resource creation request received by the receiving unit; a determining unit, configured to determine that the subscriber needs to acquire a latest status of the subscribed resource; an allocating unit, configured to allocate, after the determining unit determines that the subscriber needs to acquire the latest status of the subscribed resource, a latest status flag to the subscription resource created by the resource creating unit, where the latest status flag is used to indicate that the subscriber needs to acquire the latest status of the subscribed resource; a generating unit, configured to generate, each time when a status of the subscribed resource is updated, a notification message according to the subscription resource created by the resource creating unit, where each of the notification messages includes the updated status of the subscribed resource and the latest status flag allocated by the allocating unit; and a sending unit, configured to send each of the notification messages generated by the generating unit to the intermediate node; wherein the intermediate node is configured to receive the notification messages sent by the sending unit of the hosting CSE, and send to the subscriber according to the latest status flag, when a message sending condition is met, only a latest notification message of the received notification messages.

In a first possible implementation manner of the first aspect, that the determining unit is configured to determine that the subscriber needs to acquire a latest status of the subscribed resource, specifically includes: the determining unit is configured to determine, according to indication information included in the subscription resource creation request, that the subscriber needs to acquire the latest status of the subscribed resource.

In a second possible implementation manner of the first aspect, that the determining unit is configured to determine that the subscriber needs to acquire a latest status of the subscribed resource, specifically includes: the determining unit is configured to determine, according to indication information included in policy information that is stored locally and related to the subscriber, that the subscriber needs to acquire the latest status of the subscribed resource.

According to a second aspect, an embodiment of the present invention provides a method for implementing a subscription notification, where the method includes: receiving, by a hosting CSE, a subscription resource creation request of a subscriber, where the subscription resource creation request includes a unique identifier of a subscribed resource; creating, by the hosting CSE, a subscription resource according to the subscription resource creation request; determining, by the hosting CSE, that the subscriber needs to acquire a latest status of the subscribed resource, and allocating, by the hosting CSE, a latest status flag to the created subscription resource, where the latest status flag is used to indicate that the subscriber needs to acquire the latest status of the subscribed resource; and each time when a status of the subscribed resource is updated, generating, by the hosting CSE, a notification message according to the subscription resource, and sending, by the hosting CSE, each of the notification messages to an intermediate node, where each of the notification messages includes the updated status of the subscribed resource and the latest status flag, sending, by the intermediate node, to the subscriber according to the latest status flag, when a message sending condition is met, only a latest notification message of the received notification messages.

In a first possible implementation manner of the second aspect, the determining, by the hosting CSE, that the subscriber needs to acquire a latest status of the subscribed resource, is specifically: determining, by the hosting CSE, according to indication information included in the subscription resource creation request, that the subscriber needs to acquire the latest status of the subscribed resource.

In a second possible implementation manner of the second aspect, the determining, by the hosting CSE, that the subscriber needs to acquire a latest status of the subscribed resource, is specifically: determining, by the hosting CSE, according to indication information included in policy information that is stored locally and related to the subscriber, that the subscriber needs to acquire the latest status of the subscribed resource.

In the technical solutions provided by the embodiments of the present invention, a subscription resource creation request of a subscriber is received; a subscription resource is created according to the subscription resource creation request; that the subscriber needs to acquire a latest status of the subscribed resource is determined, and a latest status flag is allocated to the created subscription resource; and when a status of the subscribed resource is updated, a notification message is generated according to the subscription resource, and sent to an intermediate node, where the notification message includes the latest status flag, so that after the intermediate node receives the notification message, the intermediate node sends, to the subscriber according to the latest status flag, only a latest notification message that is generated according to the subscription resource. For a subscriber who cares about only a latest status of a subscribed resource, it can be avoided that multiple notification messages sent according to a same subscription resource are simultaneously sent to the subscriber over one connection, and therefore, network resources and computing resources of the subscriber are reduced.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an M2M system in the prior art;
FIG. 2 is a structural diagram of a system for implementing a subscription notification according to an embodiment of the present invention;
FIG. 3 is a structural diagram of a Hosting CSE for implementing a subscription notification according to an embodiment of the present invention;
FIG. 4 is a structural diagram of an intermediate node for implementing a subscription notification according to an embodiment of the present invention;
FIG. 5 is a flowchart of a method for implementing a subscription notification according to an embodiment of the present invention;
FIG. 6 is a flowchart of a method for implementing a subscription notification according to another embodiment of the present invention;
FIG. 7 is a flowchart of signaling for implementing a subscription notification according to an embodiment of the present invention;
FIG. 8 is a flowchart of signaling for implementing a subscription notification according to another embodiment of the present invention;
FIG. 9 is a structural diagram of a Hosting CSE based on a computer system according to an embodiment of the present invention; and
FIG. 10 is a structural diagram of an intermediate node based on a computer system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

An embodiment of the present invention provides a system for implementing a subscription notification. Referring to FIG. 2, the system 200 for implementing a subscription notification includes:
a hosting common services entity hosting CSE 201, configured to: receive a subscription resource creation request of a subscriber, where the subscription resource creation request includes a unique identifier of a subscribed resource; create a subscription resource according to the subscription resource creation request; determine that the subscriber needs to acquire a latest status of the subscribed resource, and allocate a latest status flag to the created subscription resource, where the latest status flag is used to indicate that the subscriber needs to acquire the latest status of the subscribed resource; and when a status of the subscribed resource is updated, generate a notification message according to the subscription resource, and send the notification message to an intermediate node, where the notification message includes the updated status of the subscribed resource and the latest status flag, so that after the intermediate node receives the notification message, the intermediate node sends, to the subscriber according to the latest status flag, when a message sending condition is met, only a latest notification message that is generated according to the subscription resource; and
the intermediate node 202, configured to: receive the notification message, where the notification message includes the updated status of the subscribed resource, and determine that the notification message includes the latest status flag; store the received notification message; determine the latest notification message in notification messages that are generated according to the subscription resource and stored locally; and send only the latest notification message according to the latest status flag when the message sending condition is met.

There may be one or more intermediate nodes in the system 200 for implementing a subscription notification, that is, the intermediate node may be connected to other intermediate nodes, and they perform the same operations in the process of implementing a subscription notification in the present invention.

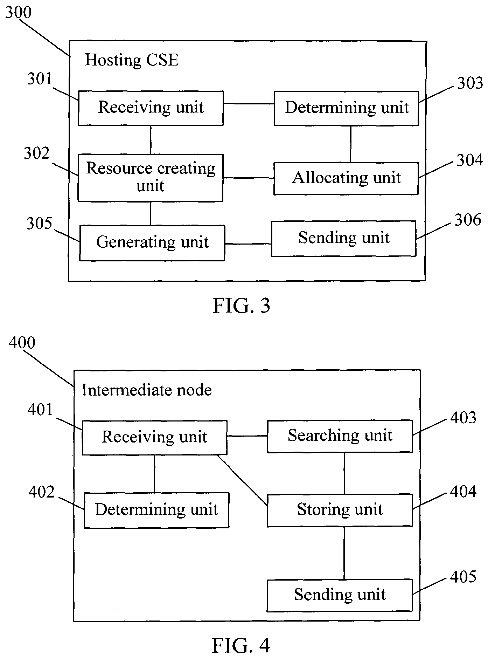

An embodiment of the present invention provides a hosting common services entity hosting CSE for implementing a subscription notification. Referring to FIG. 3, the Hosting CSE 300 includes:
a receiving unit 301, configured to receive a subscription resource creation request of a subscriber, where the subscription resource creation request includes a unique identifier of a subscribed resource;
a resource creating unit 302, configured to create a subscription resource according to the subscription resource creation request received by the receiving unit 301;
a determining unit 303, configured to determine that the subscriber needs to acquire a latest status of the subscribed resource;
an allocating unit 304, configured to allocate, after the determining unit 303 determines that the subscriber needs to acquire the latest status of the subscribed resource, a latest status flag to the subscription resource created by the resource creating unit 302, where the latest status flag is used to indicate that the subscriber needs to acquire the latest status of the subscribed resource;
a generating unit 305, configured to generate, when a status of the subscribed resource is updated, a notification message according to the subscription resource created by the resource creating unit, where the notification message includes the updated status of the subscribed resource and the latest status flag allocated by the allocating unit, so that after an intermediate node receives the notification message, the intermediate node sends, to the subscriber according to the latest status flag, when a message sending condition is met, only a latest notification message that is generated according to the subscription resource; and
a sending unit 306, configured to send the notification message generated by the generating unit 305 to the intermediate node.

Optionally, that the determining unit 303 is configured to determine that the subscriber needs to acquire a latest status of the subscribed resource, specifically includes: the determining unit 303 is configured to determine, according to indication information included in the subscription resource creation request, that the subscriber needs to acquire the latest status of the subscribed resource.

Optionally, that the determining unit 303 is configured to determine that the subscriber needs to acquire a latest status of the subscribed resource, specifically includes: the determining unit 303 is configured to determine, according to indication information included in policy information that is stored locally and related to the subscriber, that the subscriber needs to acquire the latest status of the subscribed resource.

Optionally, that the allocating unit 304 is configured to allocate, after the determining unit determines that the subscriber needs to acquire the latest status of the subscribed resource, a latest status flag to the subscription resource created by the resource creating unit, where the latest status flag is used to indicate that the subscriber needs to acquire the latest status of the subscribed resource, further includes: the latest status flag is a globally unique identifier and used to identify the subscription resource.

Optionally, that the allocating unit 304 is configured to allocate, after the determining unit determines that the subscriber needs to acquire the latest status of the subscribed resource, a latest status flag to the subscription resource created by the resource creating unit, where the latest status flag is used to indicate that the subscriber needs to acquire the latest status of the subscribed resource, further includes: the latest status flag is a unique identifier on the hosting common services entity hosting CSE and used to identify the subscription resource.

Optionally, that the allocating unit 304 is configured to allocate, after the determining unit determines that the subscriber needs to acquire the latest status of the subscribed resource, a latest status flag to the subscription resource created by the resource creating unit, where the latest status flag is used to indicate that the subscriber needs to acquire the latest status of the subscribed resource, further includes: all subscription resources have the same latest status flag.

Optionally, that the sending unit 306 is configured to send the notification message generated by the generating unit to the intermediate node, specifically includes: the sending unit 306 is configured to encapsulate the notification message generated by the generating unit 305 into an HTTP message, and send the HTTP message to the intermediate node, or after a resource representation of a store-and-forward resource is generated according to the notification message, encapsulate the resource representation into a Restful message, and send the Restful message to the intermediate node.

An embodiment of the present invention provides an intermediate node for implementing a subscription notification. Referring to FIG. 4, the intermediate node 400 includes:
a receiving unit 401, configured to receive a notification message, where the notification message includes an updated status of a subscribed resource;
a determining unit 402, configured to determine that the notification message received by the receiving unit 401 includes a latest status flag;
a storing unit 404, configured to store the notification message received by the receiving unit 401, where
the determining unit 402 is further configured to determine a latest notification message in notification messages that are generated according to a subscription resource and stored locally; and
a sending unit 405, configured to send only the latest notification message according to the latest status flag when a message sending condition is met.

Optionally, the intermediate node 400 further includes a searching unit 403, configured to find other notification messages that are stored locally, where the other notification messages and the notification message received by the receiving unit 401 are generated according to the same subscription resource; that the storing unit 404 is configured to store the notification message received by the receiving unit 401, is specifically: the storing unit 404 is configured to locally store, by replacing the other notification messages found by the searching unit 403, the notification message received by the receiving unit 401; and that the determining unit 402 is further configured to determine a latest notification message in notification messages that are generated according to the subscription resource and stored locally, is specifically: the determining unit 402 is further configured to determine that a notification message generated according to the subscription resource and stored locally is the latest notification message.

Optionally, the intermediate node 400 further includes a searching unit 403, configured to find other notification messages that are stored locally, where the other notification messages and the notification message received by the receiving unit 401 are generated according to the same subscription resource; and that the determining unit 402 is further configured to determine a latest notification message in notification messages that are generated according to the subscription resource and stored locally, is specifically: the determining unit 402 is further configured to determine the latest notification message in the notification message stored locally and the other notification messages found by the searching unit 403.

Optionally, the latest status flag is a globally unique identifier and used to identify the subscription resource; and that the searching unit 403 is configured to find other notification messages that are stored locally, where the other notification messages and the notification message are generated according to the same subscription resource, is specifically: the searching unit 403 is configured to find the other notification messages that are stored locally, where the notification message received by the receiving unit 401 and the other notification messages include the same latest status flag.

Optionally, the latest status flag is a unique identifier on a hosting common services entity hosting CSE and used to identify the subscription resource; and that the searching unit 403 is configured to find other notification messages that are stored locally, where the other notification messages and the notification message are generated according to the same subscription resource, is specifically: the searching unit 403 is configured to find the other notification messages that are stored locally, where the notification message received by the receiving unit 401 and the other notification messages include the same latest status flag and a same message sending source address.

Optionally, that the searching unit 403 is configured to find other notification messages that are stored locally, where the other notification messages and the notification message are generated according to the same subscription resource, is specifically: the searching unit 403 is configured to find the other notification messages that are stored locally, where the notification message received by the receiving unit 401 and the other notification messages include a same subscription resource uniform resource identifier (Uniform Resource Identifier, URI).

In an M2M network, an M2M services platform may be a computer, or a device having a processor. An M2M gateway is not strictly distinguished from an M2M terminal in terms of devices. For example, a device used as a gateway may also be used as a terminal. In addition, various terminal devices such as a mobile phone, a computer, a PDA, a notebook computer, a remote controller, a home appliance, various instruments and meters, and a sensor may all be used as gateways or terminals in the M2M network. In the foregoing module embodiments, division of the included modules is based on only function logic, but the division is not limited thereto, so long as corresponding functions can be implemented. In addition, specific names of the functional modules are only used to differentiate the functional modules from each other and are not used to limit the protection scope of the present invention.

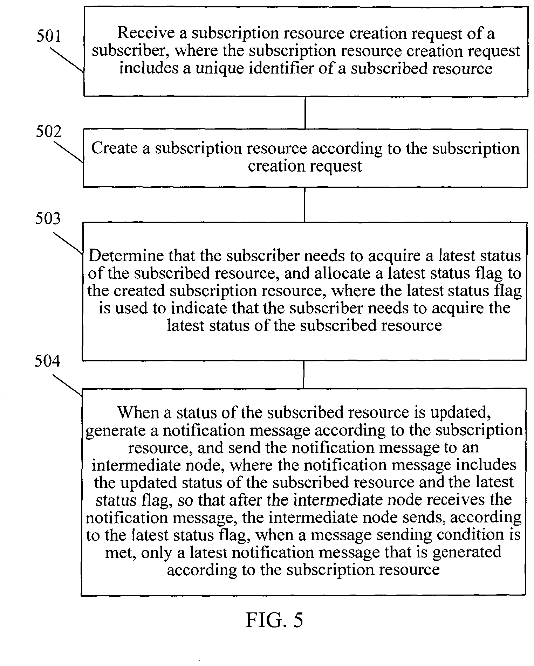

An embodiment of the present invention provides a method for implementing a subscription notification, where the method is applied to a hosting common services entity Hosting CSE on which a subscribed resource is deployed. Referring to FIG. 5, the method includes:
Step 501: Receive a subscription resource creation request of a subscriber, where the subscription resource creation request includes a unique identifier of a subscribed resource.
Step 502: Create a subscription resource according to the subscription resource creation request.
Step 503: Determine that the subscriber needs to acquire a latest status of the subscribed resource, and allocate a latest status flag to the created subscription resource, where the latest status flag is used to indicate that the subscriber needs to acquire the latest status of the subscribed resource.

Specifically, the determining that the subscriber needs to acquire a latest status of the subscribed resource, may be: determining, according to indication information included in the subscription resource creation request, that the subscriber needs to acquire the latest status of the subscribed resource, or determining, according to indication information included in policy information that is stored locally and related to the subscriber, that the subscriber needs to acquire the latest status of the subscribed resource.

Specifically, the latest status flag may be a globally unique identifier and used to identify the subscription resource, or the latest status flag may be a unique identifier on a hosting common services entity hosting CSE and used to identify the subscription resource, or all subscription resources have the same latest status flag.

Step 504: When a status of the subscribed resource is updated, generate a notification message according to the subscription resource, and send the notification message to an intermediate node, where the notification message includes the updated status of the subscribed resource and the latest status flag, so that after the intermediate node receives the notification message, the intermediate node sends, to the subscriber according to the latest status flag, when a message sending condition is met, only a latest notification message that is generated according to the subscription resource.

Specifically, the generating a notification message according to the subscription resource, and sending the notification message to an intermediate node, may be: generating the notification message according to the subscription resource, encapsulating the notification message into an HTTP message, and sending the HTTP message to the intermediate node, or after a resource representation of a store-and-forward resource is generated according to the notification message, encapsulating the resource representation into a Restful message, and sending the Restful message to the intermediate node.

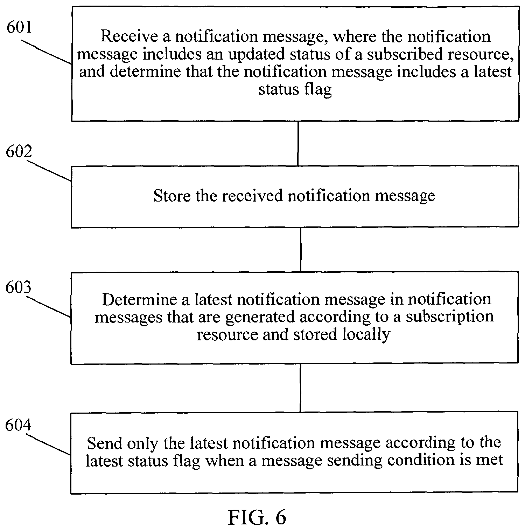

Another embodiment of the present invention provides a method for implementing a subscription notification, where the method is applied to an intermediate node for forwarding a notification message. Referring to FIG. 6, the method includes:
Step 601: Receive a notification message, where the notification message includes an updated status of a subscribed resource, and determine that the notification message includes a latest status flag.
Step 602: Store the received notification message.
Step 603: Determine a latest notification message in notification messages that are generated according to a subscription resource and stored locally.

Optionally, the storing the received notification message in step 602, specifically includes: after finding other notification messages that are stored locally, where the other notification messages and the notification message are generated according to the same subscription resource, locally storing the received notification message by replacing the other notification messages; and step 603 is specifically: determining that a notification message generated according to the subscription resource and stored locally is the latest notification message.

Optionally, step 603 is specifically: after finding other notification messages that are stored locally, where the other notification messages and the notification message are generated according to the same subscription resource, determining the latest notification message in the notification message stored locally and the other notification messages.

The latest status flag is specifically a globally unique identifier and used to identify the subscription resource, and the finding other notification messages that are stored locally, where the other notification messages and the notification message are generated according to the same subscription resource, is specifically: finding the other notification messages that are stored locally, where the notification message and the other notification messages include the same latest status flag; or the latest status flag is a unique identifier on a hosting common services entity hosting CSE and used to identify the subscription resource, and the finding other notification messages that are stored locally, where the other notification messages and the notification message are generated according to the same subscription resource, is specifically: finding the other notification messages that are stored locally, where the notification message and the other notification messages include the same latest status flag and a same message sending source address; or the finding other notification messages that are stored locally, where the other notification messages and the notification message are generated according to the same subscription resource, is specifically: finding the other notification messages that are stored locally, where the notification message and the other notification messages include a same subscription resource uniform resource identifier (Uniform Resource Identifier, URI).

Step 604: Send only the latest notification message according to the latest status flag when a message sending condition is met.

After the sending only the latest notification message when a message sending condition is met, the method further includes: deleting the notification messages that are generated according to the subscription resource and stored locally.

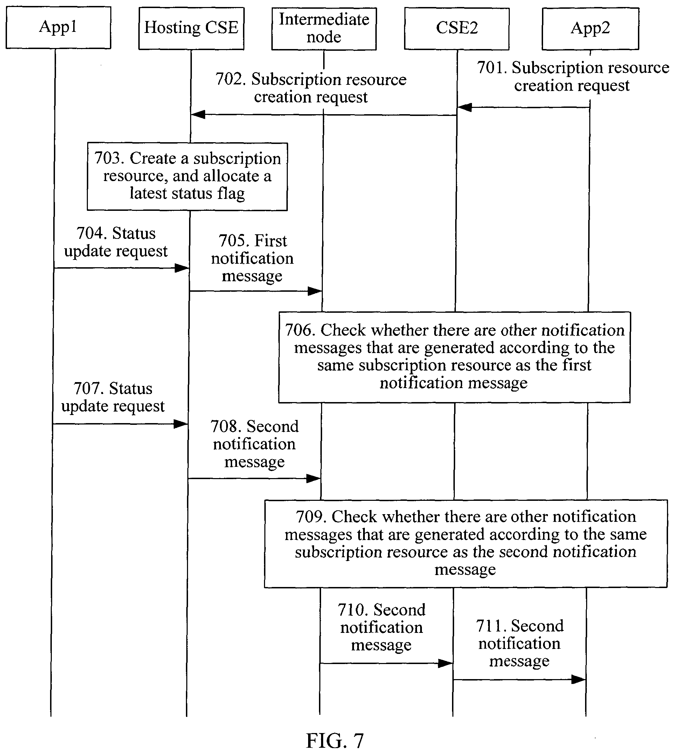

Referring to FIG. 7, an embodiment of the present invention provides a flowchart of signaling for implementing a subscription notification.

In this embodiment, an App1 registers with a local CSE of the App1. The CSE creates a registration resource for the Appl, allocates an ID to the registration resource, then generates a URI of the registration resource, and returns the URI of the registration resource to the App1. The ID of the registration resource is a globally unique string, for example, application1, and the URI of the registration resource includes the ID of the registration resource and a URI of the local CSE. Therefore, the URI of the registration resource is also a globally unique string, and the ID of the registration resource and the URI of the registration resource may both be a unique identifier of the registration resource. For example, in this embodiment, if the URI of the local CSE of the App1 is http://example.com/gateway1, the URI of the registration resource is http://example.com/gatewayl/applicationl. In addition, the App1 sets access permissions of the registration resource in a registration process or after registration ends, allowing other users including an App2 to access and subscribe to the registration resource. Herein the local CSE is referred to as a Hosting CSE of the App1. Therefore, when the App2 accesses the Hosting CSE, the App2 may find the registration resource of the App1 on the Hosting CSE, and subscribe to the registration resource after acquiring the unique identifier of the registration resource. In addition, the subscriber App2 hopes to receive a latest status of the registration resource every time. A specific implementation process is as follows:
Step 701: A subscriber App2 sends a subscription resource creation request to a gateway CSE2 with which the App2 is registered, where the subscription resource creation request includes a unique identifier of a subscribed resource and a unique identifier of the subscriber App2.

In this embodiment, the subscribed resource is also a registration resource of an App1 on the Hosting CSE. Therefore, the unique identifier of the subscribed resource is also the unique identifier of the registration resource of the App1 on the Hosting CSE.

Optionally, the subscription resource creation request may further include a subscription condition.

Optionally, the App2 adds indication information to the subscription resource creation request to indicate that the subscriber needs to acquire a latest status of the subscribed resource; or the App2 accesses a setting system of an M2M service provider beforehand, and adds indication information to configuration policy information; or when signing an agreement, the App2 and the M2M service provider agree that the App2 acquires only latest status information of the subscribed resource, and the M2M service provider adds indication information to configuration policy information; or for the subscribed resource, only latest data generated is meaningful, for example, data for displaying a status of a switch of an appliance in a smart home. In this way, the Hosting CSE in which the subscribed resource is located or the M2M service provider may add indication information to the configuration policy information, to indicate that the App2 needs to acquire the latest status of the subscribed resource, where the configuration policy information may be stored in the Hosting CSE.

The adding indication information to the subscription resource creation request or configuration policy information to indicate that the subscriber needs to acquire a latest status of the subscribed resource, may be specifically: adding a parameter RepeatCheck to the subscription resource creation request or the configuration policy information, where a value of the parameter is a specified valid value for indicating that the subscriber needs to acquire the latest status of the subscribed resource, and the parameter may be of a Boolean type, an integer type, a string type, or other types. For example, in this embodiment, the added parameter RepeatCheck is of the Boolean type; when the value of the parameter is TRUE, it indicates that the subscriber acquires only the latest status of the subscribed resource.

Step 702: After receiving the subscription resource creation request, the CSE2 forwards the subscription resource creation request to a Hosting CSE that has a registration resource (namely, a subscribed resource) of an App1. Specifically, according to the unique identifier of the subscribed resource that is carried in the subscription resource creation request, the CSE2 forwards the subscription resource creation request to the Hosting CSE that has the subscribed resource.

Step 703: The Hosting CSE creates a subscription resource after receiving the subscription resource creation request, and allocates a latest status flag to the subscription resource after determining that the subscriber needs to acquire the latest status of the subscribed resource. The Hosting CSE allocates a subscription resource ID to the subscription resource and generates a subscription resource URI, and stores an association relationship between the subscription resource and the subscribed resource.

The allocated subscription resource ID is a unique string in the Hosting CSE, for example, subscriptionB. The subscription resource URI includes a subscribed resource URI and the subscription resource ID. Because the subscribed resource URI is a globally unique string, the subscription resource URI is also a globally unique string. For example, in this embodiment, a value of the subscription resource URI is http://example.com/gateway1/application1/subscriptionB. Specifically, the created subscription resource subscriptionB is used as a child node of a resource tree of the subscribed resource application1, for storing the association relationship between subscriptionB and application1. The created subscription resource includes the unique identifier of the subscribed resource and the unique identifier of the App2 that are carried in the subscription resource creation request. Optionally, when the subscription resource creation request includes a subscription condition, the subscription resource further includes the subscription condition.

Specifically, that the Hosting CSE determines that the subscriber needs to acquire the latest status of the subscribed resource is specifically: determining, according to indication information included in the subscription resource creation request, that the App2 needs to acquire the latest status of the subscribed resource, or determining, according to indication information included in policy information that is stored locally and related to the App2, that the App2 needs to acquire the latest status of the subscribed resource. Specifically, the Hosting CSE determines, by checking whether the subscription resource creation request or the policy information has the parameter RepeatCheck and whether the parameter has the specified valid value, that the App2 needs to acquire the latest status of the subscribed resource. For example, in this embodiment, the Hosting CSE determines, by determining the carried Boolean parameter RepeatCheck and its value True, that the App2 needs to acquire the latest status of the subscribed resource.

In a first example of this embodiment, the latest status flag is a globally unique identifier and used to identify the subscription resource. Specifically, the globally unique latest status flag may be a subscription resource URI, or may be other strings.

In a second example of this embodiment, the latest status flag is a unique identifier on the hosting common services entity hosting CSE and used to identify the subscription resource. Specifically, the unique latest status flag may be a subscription resource ID, or may be other strings.

In a third example of this embodiment, all subscription resources have the same latest status flag. Specifically, the latest status flag may be a specified string.

After allocating the latest status flag to the subscription resource, the Hosting CSE may use the latest status flag as an attribute of the subscription resource or create a table to store an association relationship between the subscription resource and the latest status flag.

Step 704: When a status of the App1 is updated, the App1 sends a status update request to the Hosting CSE.

Specifically, the status update of the App1 includes application deregistration and a change of the App1 attribute. Specifically, the status update request includes a registration resource URI allocated by the Hosting CSE to the registration resource of the App1. In this embodiment of the present invention, the registration resource URI is the subscribed resource URI.

Step 705: The Hosting CSE updates the status of the subscribed resource after receiving the status update request, generates a first notification message according to the subscription resource and sends the first notification message to an intermediate node, where the first notification message includes the updated status of the subscribed resource and the latest status flag.

Specifically, step 705 includes: after receiving the status update request, the Hosting CSE updates the status of the subscribed resource according to the subscribed resource URI carried in the status update request. In addition, the Hosting CSE finds the subscription resource according to the correspondence between the subscribed resource and the subscription resource, and after determining that the subscription resource includes the latest status flag, generates the first notification message according to the subscription resource, where the first notification message includes a sending source address (namely, the Hosting CSE URI), a receiver address (namely, the App2 URI), and the subscription resource URI, and the first notification message includes the updated status of the subscribed resource and the latest status flag. Specifically, the first notification message may be a message of a primitive format, where the sending source address Hosting CSE URI, the receiver address App2 URI, and the latest status flag are included in an attribute part of the first notification message, and the subscription resource URI and the updated status of the subscribed resource are included in a resource part of the first notification message. Optionally, the resource part of the first notification message may include the updated subscribed resource. Optionally, when the subscription resource includes a subscription condition, the first notification message is generated only after it is determined that the status change of the subscribed resource meets the subscription condition. The receiver address may be acquired according to a ContactURI of the subscription resource. After generating the first notification message, and querying a routing table to acquire a next hop that is the intermediate node, the Hosting CSE sends the first notification message to the intermediate node.

In step 705, before sending the first notification message to the intermediate node, the Hosting CSE determines a delivery manner of the first notification message according to locally stored sending configuration information. Specifically, the following two delivery manners may be used. In manner 1, the first notification message is encapsulated into a hypertext transfer protocol (Hypertext transfer protocol, HTTP) message for delivery. For example, the first notification message is sent by using HTTP POST. Preferably, the attribute part of the first notification message of the primitive format is encapsulated into an HTTP message header, and the resource part of the first notification message is encapsulated into an HTTP message body. In manner 2, after a resource representation of a store-and-forward resource is generated according to the first notification message, the resource representation of the store-and-forward resource is encapsulated into a Restful message for delivery. For example, a resource representation of <delivery> is generated, the first notification message is used as a data attribute value of the resource representation of <delivery>, and then the resource representation of <delivery> is encapsulated into a Restful Create message for delivery.

Step 706: After receiving the first notification message and determining that the first notification message includes the latest status flag, the intermediate node checks whether other notification messages that are generated according to the same subscription resource as the first notification message are stored locally. In this embodiment, because this is the first status update after the App1 is subscribed to, no other notification messages that are generated according to the same subscription resource as the first notification message are stored locally, and the intermediate node stores the first notification message locally.

In the above-mentioned first example of this embodiment, the latest status flag is a globally unique identifier and used to identify the subscription resource, and that the intermediate node checks whether other notification messages that are generated according to the same subscription resource as the first notification message are stored locally, is specifically: determining whether the intermediate node stores other notification messages that include the same latest status flag as the first notification message.

In the above-mentioned second example of this embodiment, the latest status flag is a unique identifier on the hosting common services entity hosting CSE and used to identify the subscription resource, and that the intermediate node checks whether other notification messages that are generated according to the same subscription resource as the first notification message are stored locally, is specifically: determining whether the intermediate node stores other notification messages that include the same latest status flag and message sending source address as the first notification message.

In the above-mentioned third example of this embodiment, all subscription resources have the same latest status flag, and that the intermediate node checks whether other notification messages that are generated according to the same subscription resource as the first notification message are stored locally, is specifically: determining whether the intermediate node stores other notification messages that include the same subscription resource URI as the first notification message. In addition, in the first example or second example of this embodiment, the third manner may also be used to check whether other notification messages that are generated according to the same subscription resource as the first notification message are stored locally.

In the first example of this embodiment, in step 706, after it is determined that the first notification message includes the latest status flag, for each of the other notification messages, content of the message needs to be parsed to acquire the latest status flag and determining is performed once, that is, determining whether the obtained latest status flag is the same as the latest status flag included in the first notification message; in the second example of this embodiment, in step 706, after it is determined that the first notification message includes the latest status flag, a message sending source address included in the first notification message needs to be further acquired, and for each of the other notification messages, content of the message needs to be parsed to acquire the latest status flag and determining is performed twice, that is, determining whether the obtained latest status flag is the same as the latest status flag included in the first notification message and whether the obtained message sending source address is the same as the message sending source address included in the first notification message; in the third example of this embodiment, in step 706, after it is determined that the first notification message includes the latest status flag, the subscription resource URI included in the first notification message needs to be further acquired, and for each of the other notification messages, content of the message needs to be parsed to acquire the subscription resource URI and determining is performed once, that is, determining whether the obtained subscription resource URI is the same as the subscription resource URI included in the first notification message. Therefore, in comparison, processing efficiency in the first example of this embodiment is the highest.

When manner 1 is used to deliver the first notification message in step 705, the checking whether other notification messages that are generated according to the same subscription resource as the first notification message are stored locally, is specifically: checking whether other notification messages that are generated according to the same subscription resource as the first notification message are stored in a buffer queue; and the storing the first notification message locally, is specifically: storing the first notification message in the buffer queue of the intermediate node. The intermediate node includes multiple buffer queues, where each buffer queue is used to store notification messages whose next-hop CSEs are the same, and the intermediate node sets an associated timer for the buffer queue according to a store-and-forward policy of the intermediate node; and when storing a notification message in the buffer queue, if the notification message is the first notification message in the buffer queue, the intermediate node starts the timer of the buffer queue after storing the notification message.

When manner 2 is used to deliver the first notification message in step 705, the checking whether other notification messages that are generated according to the same subscription resource as the first notification message are stored locally, is specifically: checking whether other notification messages that are generated according to the same subscription resource as the first notification message are stored in the store-and-forward resource; and that the storing the first notification message locally, is specifically: creating a store-and-forward resource in the intermediate node, and storing the first notification message in an attribute of the store-and-forward resource, for example, creating a <delivery> resource, and storing the first notification message in a data attribute of the <delivery> resource. The intermediate node sets, according to the store-and-forward policy, a uniform timer for the notification messages whose next-hop CSEs are the same, and records an association relationship between the timer and the store-and-forward resource including the notification message in the CSE; when creating a store-and-forward resource every time, after determining that a next hop of the notification message included in the store-and-forward resource is the CSE, adds the association relationship between the timer and the store-and-forward resource to record information; and when adding the association relationship between the timer and the store-and-forward resource to the record information, if the store-and-forward resource is the first one in the record information, starts the timer.

Step 707: When the status of the App1 is updated again, the App1 sends a status update request to the Hosting CSE.

For implementation of step 707, reference may be made to the detailed description of step 704.

Step 708: The Hosting CSE updates the status of the subscribed resource after receiving the status update request, generates a second notification message according to the subscription resource, and sends the second notification message to the intermediate node, where the second notification message includes the updated status of the subscribed resource and the latest status flag.

For the description about updating the status of the subscribed resource in step 708, reference may be made to step 705. The description about generating, by the Hosting CSE, the second notification message according to the subscription resource, and adding the updated status of the subscribed resource and the latest status flag to the second notification message, is the same as the operation manner of the first notification message in step 705.

The manner of sending the second notification message by the Hosting CSE is the same as the manner of sending the first notification message in step 705.

Step 709: After receiving the second notification message and determining that the second notification message includes the latest status flag, the intermediate node checks whether other notification messages that are generated according to the same subscription resource as the second notification message are stored locally. In this embodiment, the first notification message is stored previously. The intermediate node replaces the first notification message with the second notification message after determining that the first notification message and the second notification message are generated according to the same subscription resource.

The implementation manner in which the intermediate node checks whether other notification messages that are generated according to the same subscription resource as the second notification message are stored locally, is the same as the implementation manner of checking whether other notification messages that are generated according to the same subscription resource as the first notification message are stored locally in step 706.

When step 708 uses manner 1 in step 705 to deliver the second notification message, the replacing the first notification message with the second notification message is specifically: replacing the first notification message in the buffer queue with the second notification message; and when step 708 uses manner 2 in step 708 to deliver the second notification message, the replacing the first notification message with the second notification message is specifically: replacing the first notification message in the store-and-forward resource with the second notification message.

Step 710: When a message sending condition is met, the intermediate node sends the locally stored notification message to the next-hop CSE, where the locally stored notification message is the second notification message in this embodiment, and the intermediate node sends the second notification message to the CSE2.

Optionally, step 710 is performed after step 706, that is, the message sending condition is met when no other notification messages that are generated according to the subscription resource are received after step 706, where the locally stored notification message is the first notification message, and the intermediate node sends the first notification message to the CSE2.

Optionally, before step 710, the intermediate node receives again one or more other notification messages that are generated according to the subscription resource, where a last one of the other notification messages is stored locally, and the intermediate node sends the last one of the other notification messages to the CSE2.

When step 705 uses manner 1 to deliver the first notification message, step 710 is specifically: when a timer associated with the buffer queue expires, send the notification message stored in the buffer queue to the next-hop CSE, and clear the timer associated with the buffer queue and delete the notification message in the buffer queue.

When step 705 uses step 2 to deliver the first notification message, step 710 is specifically: when a timer associated with the store-and-forward resource expires, sending notification messages included in all store-and-forward resources recorded in the record information to the next-hop CSE, and clearing the timer associated with the store-and-forward resource and deleting the store-and-forward resource.

Optionally, the intermediate node sends the second notification message through a second intermediate node to the CSE2, and the second intermediate node performs a same operation as the intermediate node, which is not further described herein.

Step 711: The CSE2 sends the second notification message to the App2 after receiving the second notification message.

Specifically, the gateway CSE2 determines, according to the receiver address of the second notification message, that the App2 is registered with the gateway, and sends the second notification message to the App2.

In this embodiment, after determining that a subscriber needs to acquire a latest status of a subscribed resource, a Hosting CSE sends a notification message including a latest status flag to an intermediate node, so that after the intermediate node determines that the received notification message includes the latest status flag, the intermediate node replaces an existing notification message that is generated according to a same subscription resource as the notification message and stored locally, which can ensure that the intermediate node forwards only the latest notification message that is generated according to the subscription resource. In this way, it is avoided that the subscriber receives, over one connection, multiple notification messages that are sent according to the same subscription resource, and therefore, network resources and computing resources are reduced.

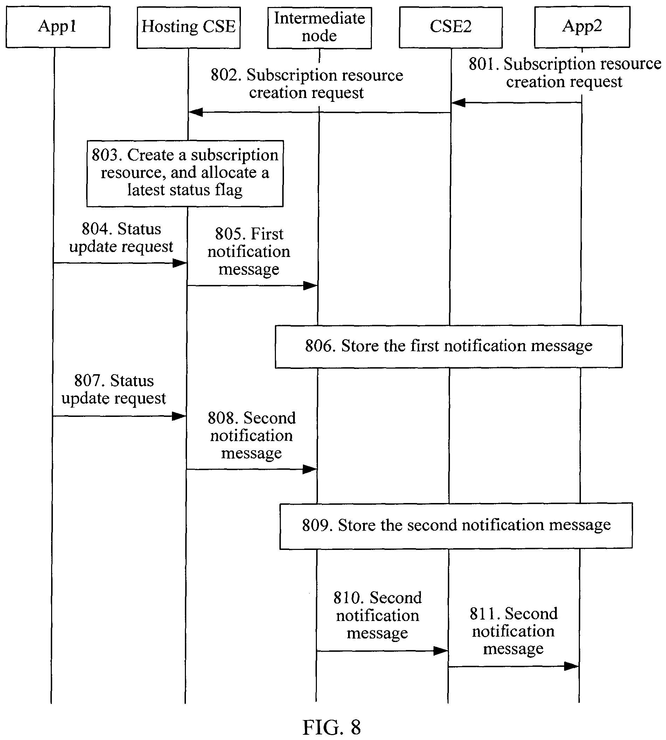

Referring to FIG. 8, another embodiment of the present invention provides a flowchart of signaling for implementing a subscription notification.

In this embodiment, an App1 registers with a local CSE of the App1. For the process of setting access permissions of a registration resource, reference may be made to the detailed description of the embodiment corresponding to FIG. 7. When an App2 accesses a Hosting CSE, the App2 may find the registration resource of the App1 on the Hosting CSE, and subscribe to the registration resource after acquiring a unique identifier of the registration resource. In addition, the subscriber App2 hopes to receive a latest status of the registration resource every time. A specific implementation process is as follows:
Step 801 to step 805: Refer to step 701 to step 705 of the embodiment corresponding to FIG. 7.

Step 806: The intermediate node stores the first notification message locally.

Specifically, for the implementation manner of the storing the first notification message locally, refer to the description about storing the first notification message locally in step 706 of the embodiment corresponding to FIG. 7.

Step 807 and step 808: Refer to step 707 and step 708 of the embodiment corresponding to FIG. 7.

Step 809: The intermediate node stores the second notification message locally.

Specifically, for the implementation manner of the storing the second notification message locally, refer to the description about storing the first notification message locally in step 706 of the embodiment corresponding to FIG. 7.

Step 810: When a message sending condition is met, after determining that the locally stored first notification message includes the latest status flag, the intermediate node checks whether other notification messages that are generated according to the same subscription resource as the first notification message are stored locally, and sends the latest notification message in the other notification messages and the first notification message to a next-hop CSE. In this embodiment, the first notification message and the second notification message are stored locally. After determining that the second notification message is the latest notification message, the intermediate node sends the second notification message to the CSE2.

Optionally, step 810 is performed after step 806, that is, the message sending condition is met when no other notification messages that are generated according to the subscription resource are received after step 806, where only the first notification message is stored locally, and the intermediate node sends the first notification message to the CSE2.

Optionally, before step 810, the intermediate node receives again one or more other notification messages that are generated according to the subscription resource, where the first notification message, the second notification message, and the other notification messages are stored locally, and the intermediate node sends the latest notification message in the first notification message, the second notification message, and the other notification messages to the CSE2.

When step 805 uses manner 1 to deliver the first notification message, that a message sending condition is met is specifically: a timer associated with a buffer queue expires.

When step 805 uses manner 2 to deliver the first notification message, that a message sending condition is met is specifically: a timer associated with a store-and-forward resource expires.

Specifically, for implementation of the checking whether other notification messages that are generated according to the same subscription resource as the first notification message are stored locally, refer to the description about the operation in step 706 of the embodiment corresponding to FIG. 7.

Specifically, the notification message includes timestamp information. The sending the latest notification message in the other notification messages and the first notification message to a next-hop CSE, is specifically: sending the latest notification message in the other notification messages and the first notification message to the next-hop CSE according to timestamp information included in the other notification messages and the first notification message.

Specifically, after sending the latest notification message in the other notification messages and the first notification message to a next-hop CSE in step 810, step 810 further includes: the intermediate node deletes the other notification messages stored locally and the first notification message.

Optionally, the intermediate node sends the second notification message through a second intermediate node to the CSE2. The second intermediate node performs a same operation as the intermediate node, which is not further described herein.

Step 811: Refer to step 711 of the embodiment corresponding to FIG. 7.

In this embodiment, after determining that a subscriber needs to acquire a latest status of a subscribed resource, a Hosting CSE sends a notification message including a latest status flag to an intermediate node; the intermediate node stores the notification message; when it is necessary to send the notification message, after determining that the notification message includes the latest status flag, the intermediate node finds other notification messages that are generated according to a same subscription resource as the notification message and stored locally, and delivers a latest notification message in the notification message and the other notification messages, which can ensure that the intermediate node forwards only the latest notification that is generated according to the subscription resource. In this way, it is avoided that the subscriber receives, over one connection, multiple notifications that are sent according to the same subscription resource, and therefore, network resources and computing resources are reduced.

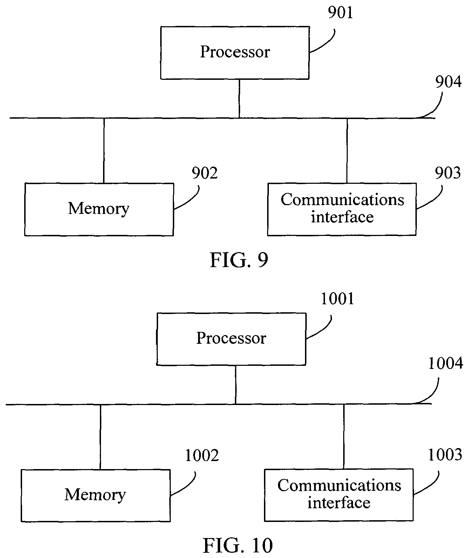

A Hosting CSE in an embodiment of the present invention may be implemented based on a computer system. The methods shown in FIG. 5, FIG. 7, and FIG. 8 may all be implemented by a Hosting CSE based on a computer system. FIG. 9 shows an embodiment of a Hosting CSE implemented based on a computer system. The Hosting CSE in this embodiment may include a processor 901, a memory 902, and a communications interface 903.

The communications interface 903 is configured to communicate with a subscriber and an intermediate node. Messages exchanged between the Hosting CSE and the subscriber and intermediate node are all sent and received through the communications interface 903. Specifically, the communications interface 903 is configured to receive a subscription resource creation request of the subscriber and send a notification message to the intermediate node; the memory 902 is configured to store a program instruction; the processor 901 is configured to invoke, after the communications interface 903 receives the subscription resource creation request from the subscriber, the program instruction stored in the memory 902 to perform the following operations: creating a subscription resource according to the subscription resource creation request; after determining that the subscriber needs to acquire a latest status of a subscribed resource, allocating a latest status flag to the created subscription resource, where the latest status flag is used to indicate that the subscriber needs to acquire the latest status of the subscribed resource; when a status of the subscribed resource is updated, generating a notification message according to the subscription resource and sending the notification message to the intermediate node, where the notification message includes the updated status of the subscribed resource and the latest status flag, so that after the intermediate node receives the notification message, the intermediate node sends, to the subscriber according to the latest status flag, when a message sending condition is met, only a latest notification message that is generated according to the subscription resource.

The processor 901 may be a central processing unit (central processing unit, CPU), an application-specific integrated circuit (application-specific integrated circuit, ASIC), or the like. The Hosting CSE in this embodiment may include a bus 904. The processor 901, the memory 902, and the communications interface 903 may be connected and communicate with each other by using the bus 904. The memory 902 may include an entity with a storage function such as a random access memory (random access memory, RAM), a read-only memory (read-only memory, ROM), and a magnetic disk.

The processor 901 may be further configured to perform steps of the Hosting CSE described in FIG. 5, FIG. 7, and FIG. 8 in the method embodiments, and is not further described herein in this embodiment of the present invention.

An intermediate node in an embodiment of the present invention may be implemented based on a computer system. The methods shown in FIG. 6, FIG. 7, and FIG. 8 may all be implemented by an intermediate node based on a computer system. FIG. 10 shows an embodiment of an intermediate node implemented based on a computer system. The intermediate node in this embodiment may include a processor 1001, a memory 1002, and a communications interface 1003.

The communications interface 1003 is configured to communicate with a previous-hop CSE. Messages exchanged between the intermediate node and the previous-hop CSE are all sent and received through the communications interface 1003. Specifically, the communications interface 1003 is configured to receive a notification message from the previous-hop CSE; the memory 1002 is configured to store a program instruction; the processor 1001 is configured to invoke, after the communications interface 1003 receives the notification message from the previous-hop CSE, the program instruction stored in the memory 1002 to perform the following operations: determining that the notification message includes a latest status flag; storing the received notification message; determining a latest notification message in notification messages that are generated according to a subscription resource and stored locally; and sending only the latest notification message according to the latest status flag when a message sending condition is met.

The processor 1001 may be a central processing unit (central processing unit, CPU), an application-specific integrated circuit (application-specific integrated circuit, ASIC), or the like. The intermediate node in this embodiment may include a bus 1004. The processor 1001, the memory 1002, and the communications interface 1003 may be connected and communicate with each other by using the bus 1004. The memory 1002 may include an entity with a storage function such as a random access memory (random access memory, RAM), a read-only memory (read-only memory, ROM), and a magnetic disk.

The processor 1001 may be further configured to perform steps of the intermediate node described in FIG. 6, FIG. 7, and FIG. 8 in the method embodiments, and is not further described herein in this embodiment of the present invention.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A machine to machine, M2M, system (200) for implementing a subscription notification, comprising a hosting common services entity (201, 300), CSE, and an intermediate node (202, 400), wherein the hosting CSE comprises:
a receiving unit (301), configured to receive a subscription resource creation request of a subscriber, wherein the subscription resource creation request comprises a unique identifier of a subscribed resource;
a resource creating unit (302), configured to create a subscription resource according to the subscription resource creation request received by the receiving unit;
a determining unit (303), configured to determine that the subscriber needs to acquire a latest status of the subscribed resource;
an allocating unit (304), configured to allocate, after the determining unit determines that the subscriber needs to acquire the latest status of the subscribed resource, a latest status flag to the subscription resource created by the resource creating unit, wherein the latest status flag is used to indicate that the subscriber needs to acquire the latest status of the subscribed resource;
a generating unit (305), configured to generate, each time when a status of the subscribed resource is updated, a notification message according to the subscription resource created by the resource creating unit, wherein each of the notification messages comprises the updated status of the subscribed resource and the latest status flag allocated by the allocating unit; and
a sending unit (306), configured to send each of the notification messages generated by the generating unit to the intermediate node;
wherein the intermediate node (400) is configured to receive the notification messages sent by the sending unit of the hosting CSE, and send, to the subscriber according to the latest status flag, when a message sending condition is met, only a latest notification message of the received notification messages.

2. The M2M system according to claim 1, wherein the determining unit (303) is configured to determine that the subscriber needs to acquire a latest status of the subscribed resource, specifically comprises: the determining unit is configured to determine, according to indication information comprised in the subscription resource creation request, that the subscriber needs to acquire the latest status of the subscribed resource.

3. The M2M system according to claim 1, wherein that the determining unit (303) is configured to determine that the subscriber needs to acquire a latest status of the subscribed resource, specifically comprises: the determining unit is configured to determine, according to indication information comprised in policy information that is stored locally and related to the subscriber, that the subscriber needs to acquire the latest status of the subscribed resource.

4. The M2M system according to any one of claims 1 to 3, wherein all subscription resources have the same latest status flag.

5. The M2M system according to any one of claims 1 to 4, wherein that the sending unit (306) is configured to send each of the notification messages generated by the generating unit to the intermediate node, specifically comprises: the sending unit (306) is configured to encapsulate the notification message generated by the generating unit into an hypertext transfer protocol, HTTP, message, and send the HTTP message to the intermediate node, or after a resource representation of a store-and-forward resource is generated according to the notification message, encapsulate the resource representation into a Restful message, and send the Restful message to the intermediate node.

6. A method for implementing a subscription notification in a M2M system, wherein the method comprises:
receiving (501), by a hosting CSE, a subscription resource creation request of a subscriber, wherein the subscription resource creation request comprises a unique identifier of a subscribed resource;
creating (502), by the hosting CSE, a subscription resource according to the subscription resource creation request;
determining (503), by the hosting CSE, that the subscriber needs to acquire a latest status of the subscribed resource, and allocating, by the hosting CSE, a latest status flag to the created subscription resource, wherein the latest status flag is used to indicate that the subscriber needs to acquire the latest status of the subscribed resource; and
each time when (504) a status of the subscribed resource is updated, generating, by the hosting CSE, a notification message according to the subscription resource, and sending, by the hosting CSE, each of the notification messages to an intermediate node, wherein each of the notification messages comprises the updated status of the subscribed resource and the latest status flag;
sending (504), by the intermediate node, to the subscriber according to the latest status flag, when a message sending condition is met, only a latest notification message of the received notification messages.

7. The method according to claim 6, wherein the determining, by the hosting CSE, that the subscriber needs to acquire a latest status of the subscribed resource, is specifically: determining, by the hosting CSE, according to indication information comprised in the subscription resource creation request, that the subscriber needs to acquire the latest status of the subscribed resource.

8. The method according to claim 6, wherein the determining by the hosting CSE, that the subscriber needs to acquire a latest status of the subscribed resource, is specifically: determining, by the hosting CSE, according to indication information comprised in policy information that is stored locally and related to the subscriber, that the subscriber needs to acquire the latest status of the subscribed resource.

9. The method according to any one of claims 6 to 8, wherein all subscription resources have the same latest status flag.

10. The method according to any one of claims 6 to 9, wherein the generating a notification message, by the hosting CSE, according to the subscription resource, and sending each of the notification messages to an intermediate node, comprises: generating, by the hosting CSE, the notification message according to the subscription resource, encapsulating the notification message into an HTTP message, and sending the HTTP message to the intermediate node, or after a resource representation of a store-and-forward resource is generated according to the notification message, encapsulating the resource representation into a Restful message, and sending the Restful message to the intermediate node.

## Patentansprüche

1. Maschine-zu-Maschine(M2M)-System (200) zum Implementieren einer Teilnahmebenachrichtigung, umfassend eine Host-Einheit (201, 300) für gemeinsame Dienste (*common services entity-* CSE) und einen Zwischenknoten (202, 400), wobei die Host-CSE Folgendes umfasst:
eine Empfangseinheit (301), die konfiguriert ist, um eine Teilnahmeressourcenerstellungsanforderung eines Teilnehmers zu empfangen, wobei die Teilnahmeressourcenerstellungsanforderung eine eindeutige Kennung einer teilnehmenden Ressource umfasst;
eine Ressourcenerstellungseinheit (302), die konfiguriert ist, um eine Teilnahmeressource gemäß der von der Empfangseinheit empfangenen Teilnahmeressourcenerstellungsanforderung zu erstellen;
eine Bestimmungseinheit (303), die konfiguriert ist, um zu bestimmen, dass der Teilnehmer einen neuesten Status der teilnehmenden Ressource erhalten muss;
eine Zuordnungseinheit (304), die konfiguriert ist, um, nachdem die Bestimmungseinheit bestimmt hat, dass der Teilnehmer den neuesten Status der teilnehmenden Ressource erhalten muss, ein Flag für den neuesten Status der von der Ressourcenerstellungseinheit erstellten Teilnahmeressourcen zuzuordnen, wobei das Flag für den neuesten Status verwendet wird, um anzuzeigen, dass der Teilnehmer den neuesten Status der teilnehmenden Ressource erhalten muss;
eine Erzeugungseinheit (305), die konfiguriert ist, um jedes Mal, wenn ein Status der teilnehmenden Ressource aktualisiert wird, eine Benachrichtigungsmeldung gemäß der von der Ressourcenerstellungseinheit erstellten Teilnahmeressource zu erzeugen, wobei jede der Benachrichtigungsmeldungen den aktualisierten Status der teilnehmende Ressource und das Flag für den neuesten Status umfasst, die von der Zuordnungseinheit zugeordnet wurde; und
eine Sendeeinheit (306), die konfiguriert ist, um jede der von der Erzeugungseinheit erzeugten Benachrichtigungsmeldungen an den Zwischenknoten zu senden;
wobei der Zwischenknoten (400) konfiguriert ist, um die von der Sendeeinheit der Host-CSE gesendeten Benachrichtigungsmeldungen zu empfangen und, gemäß demFlag für den neuesten Status, nur eine neueste Benachrichtigungsmeldung der empfangenen Benachrichtigungsmeldungen an den Teilnehmer zu senden, wenn eine Meldungssendebedingung erfüllt ist.

2. M2M-System nach Anspruch 1, wobei die Bestimmungseinheit (303), die konfiguriert ist, um zu bestimmen, dass der Teilnehmer einen neuesten Status der teilnehmenden Ressource erhalten muss, speziell Folgendes umfasst:
die Bestimmungseinheit ist konfiguriert, um gemäß den in der Teilnahmeressourcenerstellungsanforderung enthaltenen Anzeigeinformationen zu bestimmen, dass der Teilnehmer den neuesten Status der teilnehmenden Ressource erhalten muss.

3. M2M-System nach Anspruch 1, wobei, dass die Bestimmungseinheit (303) konfiguriert ist, um zu bestimmen, dass der Teilnehmer einen neuesten Status der teilnehmenden Ressource erhalten muss, speziell Folgendes umfasst:
die Bestimmungseinheit ist konfiguriert, um gemäß den in Richtlinieninformationen, die lokal gespeichert sind und den Teilnehmer betreffen, enthaltenen Anzeigeinformationen zu bestimmen, dass der Teilnehmer den neuesten Status der teilnehmenden Ressource erhalten muss.

4. M2M-System nach einem der Ansprüche 1 bis 3, wobei alle Teilnahmeressourcen das gleiche Flag für den neuesten Status aufweisen.

5. M2M-System nach einem der Ansprüche 1 bis 4, wobei, dass die Sendeeinheit (306) konfiguriert ist, um jede der von der Erzeugungseinheit erzeugten Benachrichtigungsmeldungen an den Zwischenknoten zu senden, speziell Folgendes umfasst:
die Sendeeinheit (306) ist konfiguriert, um die von der Erzeugungseinheit erzeugte Benachrichtigungsmeldung in eine Hypertext-Übertragungsprotokoll(*hypertext transfer protocol* - HTTP)-Meldung einzukapseln und die HTTP-Meldung an den Zwischenknoten zu senden, oder, nachdem eine Ressourcendarstellung einer Speichervermittlungsressource gemäß der Benachrichtigungsmeldung erzeugt wurde, die Ressourcendarstellung in eine RESTful-Meldung einzukapseln und die RESTful-Meldung an den Zwischenknoten zu senden.

6. Verfahren zum Implementieren einer Teilnahmebenachrichtigung in einem M2M-System, wobei das Verfahren Folgendes umfasst:
Empfangen (501), durch eine Host-CSE, einer Teilnahmeressourcenerstellungsanforderung eines Teilnehmers, wobei die Teilnahmeressourcenerstellungsanforderung eine eindeutige Kennung einer teilnehmenden Ressource umfasst;
Erstellen (502), durch die Host-CSE, einer Teilnahmeressource gemäß der von der Empfangseinheit empfangenen Teilnahmeressourcenerstellungsanforderung;
Bestimmen (503), durch die Host-CSE, dass der Teilnehmer einen neuesten Status der teilnehmenden Ressource erhalten muss, und Zuordnen, durch die Host-CSE, eines Flag für den neuesten Status zu der erstellten Teilnahmeressource, wobei das Flag für den neuesten Status verwendet wird, um anzuzeigen, dass der Teilnehmer den neuesten Status der teilnehmenden Ressource erhalten muss; und
jedes Mal, wenn (504) ein Status der teilnehmenden Ressource aktualisiert wird, Erzeugen einer Benachrichtigungsmeldung gemäß der Teilnahmeressource durch die Host-CSE und Senden jeder der Benachrichtigungsmeldungen durch die Host-CSE an einen Zwischenknoten, wobei jede der Benachrichtigungsmeldungen den aktualisierten Status der teilnehmenden Ressource und das Flag für den neuesten Status umfasst;
Senden (504), durch den Zwischenknoten, gemäß dem Flag für den neuesten Status, nur einer neuesten Benachrichtigungsmeldung der empfangenen Benachrichtigungsmeldungen an den Teilnehmer, wenn eine Meldungssendebedingung erfüllt ist.

7. Verfahren nach Anspruch 6, wobei das Bestimmen, durch die Host-CSE, dass der Teilnehmer einen neuesten Status der teilnehmenden Ressource erhalten muss, speziell Folgendes ist:
Bestimmen, durch die Host-CSE, gemäß den in der Teilnahmeressourcenerstellungsanforderung enthaltenen Anzeigeinformationen, dass der Teilnehmer den neuesten Status der teilnehmenden Ressource erhalten muss.

8. Verfahren nach Anspruch 6, wobei das Bestimmen, durch die Host-CSE, dass der Teilnehmer einen neuesten Status der teilnehmenden Ressource erhalten muss, speziell Folgendes ist:
Bestimmen, durch die Host-CSE, gemäß den in Richtlinieninformationen, die lokal gespeichert sind und den Teilnehmer betreffen, enthaltenen Anzeigeinformationen, dass der Teilnehmer den neuesten Status der teilnehmenden Ressource erhalten muss.

9. Verfahren nach einem der Ansprüche 6 bis 8, wobei alle Teilnahmeressourcen das gleiche Flag für den neuesten Status aufweisen.

10. Verfahren nach einem der Ansprüche 6 bis 9, wobei das Erzeugen einer Benachrichtigungsmeldung, durch die Host-CSE, gemäß der Teilnahmeressource, und das Senden jeder der Benachrichtigungsmeldungen an einen Zwischenknoten, Folgendes umfasst:
Erzeugen, durch die Host-CSE, der Benachrichtigungsmeldung gemäß der Teilnahmeressource, Einkapseln der Benachrichtigungsmeldung in eine HTTP-Meldung und Senden der HTTP-Meldung an den Zwischenknoten oder, nachdem eine Ressourcendarstellung einer Speichervermittlungsressource gemäß einer Benachrichtigungsmeldung erzeugt wurde, Einkapseln der Ressourcendarstellung in eine RESTful-Meldung und Senden der RESTful-Meldung an den Zwischenknoten.

## Revendications

1. Système machine à machine M2M (200) permettant la mise en œuvre d'une notification d'abonnement, comprenant une entité de services communs CSE (201, 300) d'hébergement et un nœud intermédiaire (202, 400), dans lequel la CSE d'hébergement comprend :
une unité de réception (301), configurée pour recevoir une demande de création de ressource disponible par abonnement d'un abonné, la demande de création de ressource disponible par abonnement comprenant un identifiant unique d'une ressource faisant l'objet d'un abonnement ;
une unité de création de ressource (302), configurée pour créer une ressource disponible par abonnement selon la demande de création de ressource disponible par abonnement reçue par l'unité de réception ;
une unité de détermination (303), configurée pour déterminer que l'abonné doit acquérir un état le plus récent de la ressource faisant l'objet d'un abonnement ;
une unité d'allocation (304), configurée pour allouer, après que l'unité de détermination a déterminé que l'abonné doit acquérir l'état le plus récent de la ressource faisant l'objet d'un abonnement, un indicateur d'état le plus récent à la ressource disponible par abonnement créée par l'unité de création de ressource, l'indicateur d'état le plus récent étant utilisé pour indiquer que l'abonné doit acquérir l'état le plus récent de la ressource faisant l'objet d'un abonnement ;
une unité de génération (305), configurée pour générer, à chaque fois qu'un état de la ressource faisant l'objet d'un abonnement est mis à jour, un message de notification selon la ressource disponible par abonnement créée par l'unité de création de ressource, chacun des messages de notification comprenant l'état mis à jour de la ressource faisant l'objet d'un abonnement et l'indicateur d'état le plus récent alloué par l'unité d'allocation ; et
une unité d'envoi (306), configurée pour envoyer chacun des messages de notification générés par l'unité de génération au nœud intermédiaire ;
le nœud intermédiaire (400) étant configuré pour recevoir les messages de notification envoyés par l'unité d'envoi de la CSE d'hébergement, et pour envoyer à l'abonné selon l'indicateur d'état le plus récent, lorsqu'une condition d'envoi de message est remplie, uniquement un message de notification le plus récent parmi les messages de notification reçus.

2. Système M2M selon la revendication 1, dans lequel l'unité de détermination (303) est configurée pour déterminer que l'abonné doit acquérir un état le plus récent de la ressource faisant l'objet d'un abonnement, comprend spécifiquement : le fait que l'unité de détermination est configurée pour déterminer, selon des informations d'indication comprises dans la demande de création de ressource disponible par abonnement, que l'abonné doit acquérir l'état le plus récent de la ressource faisant l'objet d'un abonnement.

3. Système M2M selon la revendication 1, dans lequel l'unité de détermination (303) est configurée pour déterminer que l'abonné doit acquérir un état le plus récent de la ressource faisant l'objet d'un abonnement, comprend spécifiquement : le fait que l'unité de détermination est configurée pour déterminer, selon des informations d'indication comprises dans des informations de politique stockées localement et relatées à l'abonné, que l'abonné doit acquérir l'état le plus récent de la ressource faisant l'objet d'un abonnement.

4. Système M2M selon l'une quelconque des revendications 1 à 3, dans lequel toutes les ressources disponibles par abonnement ont le même indicateur d'état le plus récent.

5. Système M2M selon l'une quelconque des revendications 1 à 4, dans lequel le fait que l'unité d'envoi (306) est configurée pour envoyer chacun des messages de notification générés par l'unité de génération au nœud intermédiaire comprend spécifiquement : le fait que l'unité d'envoi (306) est configurée pour encapsuler le message de notification généré par l'unité de génération dans un message de protocole de transfert hypertexte, HTTP, et pour envoyer le message HTTP au nœud intermédiaire, ou, après la génération selon le message de notification d'une représentation de ressource relative à une ressource à enregistrer et retransmettre, encapsuler la représentation de la ressource dans un message RESTful et envoyer le message RESTful au nœud intermédiaire.

6. Procédé de mise en œuvre d'une notification d'abonnement dans un système M2M, dans lequel le procédé comprend :
la réception (501), par une CSE d'hébergement, d'une demande de création de ressource disponible par abonnement d'un abonné, la demande de création de ressource disponible par abonnement comprenant un identifiant unique d'une ressource faisant l'objet d'un abonnement ;
la création (502), par la CSE d'hébergement, d'une ressource disponible par abonnement selon la demande de création de ressource disponible par abonnement ;
la détermination (503), par la CSE d'hébergement, que l'abonné doit acquérir l'état le plus récent de la ressource faisant l'objet d'un abonnement, et allouer, par la CSE d'hébergement, un indicateur d'état le plus récent à la ressource disponible par abonnement créée, l'indicateur d'état le plus récent étant utilisé pour indiquer que l'abonné doit acquérir l'état le plus récent de la ressource faisant l'objet d'un abonnement ; et
la génération, à chaque fois (504) qu'un état de la ressource faisant l'objet d'un abonnement est mis à jour, par la CSE d'hébergement, d'un message de notification selon la ressource disponible par abonnement, et l'envoi, par la CSE d'hébergement, de chacun des messages de notification à un nœud intermédiaire, chacun des messages de notification comprenant l'état mis à jour de la ressource faisant l'objet d'un abonnement et l'indicateur d'état le plus récent ;
'envoi (504), par le nœud intermédiaire, à l'abonné selon l'indicateur d'état le plus récent, lorsqu'une condition d'envoi de message est remplie, d'uniquement un message de notification le plus récent parmi les messages de notification reçus.

7. Procédé selon la revendication 6, dans lequel la détermination, par la CSE d'hébergement, que l'abonné doit acquérir un état le plus récent de la ressource faisant l'objet d'un abonnement, est spécifiquement : la détermination, par la CSE d'hébergement, selon les informations d'indication comprises dans la demande de création de ressource disponible par abonnement, du fait que l'abonné doit acquérir l'état le plus récent de la ressource faisant l'objet d'un abonnement.

8. Procédé selon la revendication 6, dans lequel la détermination, par la CSE d'hébergement, que l'abonné doit acquérir un état le plus récent de la ressource faisant l'objet d'un abonnement, est spécifiquement : la détermination, par la CSE d'hébergement, selon des informations d'indication comprises dans les informations de politique stockées localement et concernant l'abonné, que l'abonné doit acquérir l'état le plus récent de la ressource faisant l'objet d'un abonnement.

9. Procédé selon l'une quelconque des revendications 6 à 8, dans lequel toutes les ressources disponibles par abonnement ont le même indicateur d'état le plus récent.

10. Procédé selon l'une quelconque des revendications 6 à 9, dans lequel la génération d'un message de notification, par la CSE d'hébergement, selon la ressource disponible par abonnement, et l'envoi de chacun des messages de notification à un nœud intermédiaire, comprend : la génération, par la CSE d'hébergement, du message de notification selon la ressource disponible par abonnement, l'encapsulation du message de notification dans un message HTTP, et l'envoi du message HTTP au nœud intermédiaire, ou, après la génération selon le message de notification d'une représentation de ressource d'une ressource à enregistrer et retransmettre, l'encapsulation de la représentation de la ressource dans un message RESTful et l'envoi du message RESTful au nœud intermédiaire.
